(19) **Europäisches Patentamt**

**European Patent Office**

**Office européen des brevets**

(11) **EP 1 074 334 B1**

(12) **EUROPÄISCHE PATENTSCHRIFT**

(45) Veröffentlichungstag und Bekanntmachung des Hinweises auf die Patenterteilung:
**18.12.2002 Patentblatt 2002/51**

(51) Int Cl.⁷: **B23Q 1/26**, G12B 9/08, G02B 21/00, G02B 21/16, G02B 21/06, G01B 5/00

(21) Anmeldenummer: **00113641.5**

(22) Anmeldetag: **28.06.2000**

(54) **Halterung zur Befestigung einer Komponente mit einem aussenseitig angeordneten, symmetrischen Schwalbenschwanzschlitten**

Mount for fixing a component by means of a symmetric dove-tail guide disposed on its outside

Attache pour supporter un composant par une entaille extérieure à queue d'aronde symmétrique

(84) Benannte Vertragsstaaten:
**DE FR GB**

(30) Priorität: **05.08.1999 DE 19936497**

(43) Veröffentlichungstag der Anmeldung:
**07.02.2001 Patentblatt 2001/06**

(73) Patentinhaber: **Leica Microsystems Wetzlar GmbH**
**35578 Wetzlar (DE)**

(72) Erfinder: **Weiss, Albrecht**
**35440 Linden (DE)**

(74) Vertreter: **Reichert, Werner F., Dr.**
**Leica Microsystems International Holdings GmbH,**
**Konzernstelle Patente + Marken,**
**Postfach 20 20**
**35530 Wetzlar (DE)**

(56) Entgegenhaltungen:
**EP-A- 0 323 550      DE-A- 2 316 386**
**DE-A- 3 610 692      DE-A- 19 508 541**
**US-A- 3 813 132       US-A- 5 560 572**

**Beschreibung**

Die Erfindung betrifft eine Halterung zur Befestigung einer Komponente mit einem außenseitig angeordneten, symmetrischen Schwalbenschwanzschlitten gegen eine Anlagefläche.

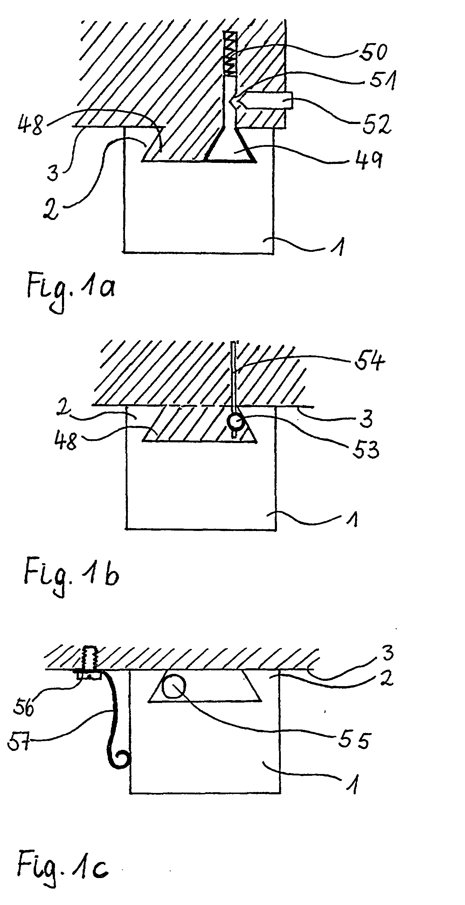

Es sind verschiedene Halterungen bekannt, z. B. aus der DE 2316 386 A, der US 3 813 132 A oder der EP 0 323 550 A1; mit denen Komponenten mit einem außenseitig angeordneten Schwalbenschwanzschlitten gegen eine Anlagefläche befestigt werden können. In den Fig. 1a-1c sind drei solcher bekannter Halterungen dargestellt.

Fig. 1a zeigt einen Schnitt durch eine Komponente 1, die an einer ihrer Außenseiten einen Schwalbenschwanzschlitten 2 aufweist. Eine Anlagefläche 3 weist eine dem Innenprofil des Schwalbenschwanzschlittens 2 angepaßte Schwalbenschwanzführung 48 auf. Im Randbereich der Schwalbenschwanzführung 48 ist senkrecht zur Anlagefläche 3 ein Drehteil 49 mit angeformten Konus in die Schwalbenschwanzführung 48 eingelassen und hinter der Anlagefläche 3 mit einer Rückstellfeder 50 vorgespannt. Das Drehteil 49 weist seitlich eine Kegelnut 51 auf, in welche die Spitze einer Madenschraube 52 einfaßt. Es ist deutlich zu erkennen, dass das Profil des Konus des Drehteils 49 dem äußeren Profil der Schwalbenschwanzführung 48 identisch nachgebildet ist. Beim Anziehen der Madenschraube 52 wird das Drehteil 49 mit seinem Konus in Richtung der Rückstellfeder 50 gegen die Innenseite des Schwalbenschwanzschlittens 2 gedrückt und klemmt diesen fest. Diese Art der Halterung ist sicher gegen Verkippen zu den beiden Seiten der Schwalbenschwanzführung 48 als auch sicher gegen versehentliches Abziehen der Komponente 1 von der Anlagefläche 3 weg. Der Nachteil der Halterung besteht jedoch darin, dass zur Montage ein Werkzeug zum Eindrehen der Madenschraube 52 erforderlich ist. Außerdem ragt das Drehteil 49 mit dem Konus und der dahinter angeordneten Rückstellfeder 50 weit hinter die Anlagefläche 3. Dadurch entsteht ein großer Platzbedarf hinter der Anlagefläche 3, der 15 mm und mehr betragen kann. Eine große Halterung kann jedoch nur schwierig in ein anderes Gerät integriert werden.

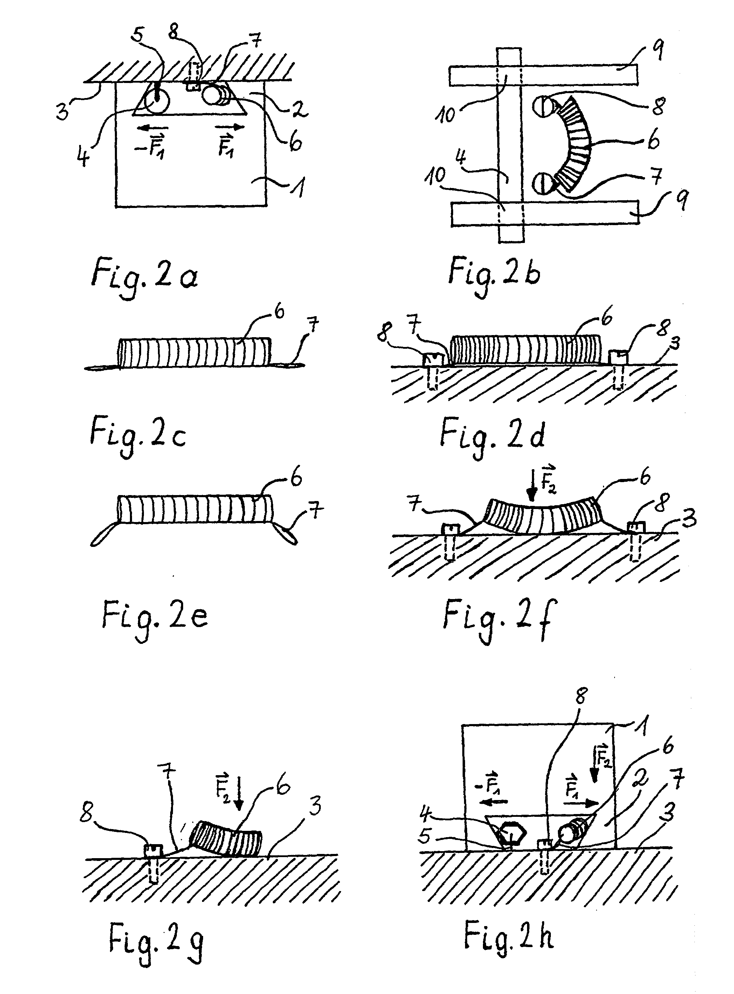

Fig. 1 b zeigt eine zweite Variante einer Halterung für eine Komponente 1 mit einem außenseitig angeordneten Schwalbenschwanzschlitten 2. Vor einer Anlagefläche 3 ist wiederum eine Schwalbenschwanzführung 48 mit einem ar den Schwalbenschwanzschlitten 2 angepaßten Profil angearbeitet. Jedoch ist die eine Seite der Schwalbenschwanzführung 48 etwa auf der Hälfte ihrer Länge unterbrochen. So bleibt ein Teilbereich des Schwalbenschwanzschlittens 2 frei, der nicht von der Schwalbenschwanzführung 48 ausgefüllt wird. In diesem freibleibenden Teilbereich ist seitlich, an der Innenseite des Schwalbenschwanzschlittens 2 anliegend eine Kugel 53 angeordnet, die an eine Blattfeder 54 angeklebt ist. Diese Blattfeder 54 ragt mit ihrem von der Kugel 53 abgewandten Ende in einen freien Raum weit hinter die Anlagefläche 3 zurück und ist mit diesem Ende hinter der Anlagefläche 3 befestigt. Die Federkraft der Blattfeder 54 drückt die eingeklebte Kugel 53 gegen das Innenprofil des Schwalbenschwanzschlittens 2, so dass der Schwalbenschwanzschlitten 2 auf der Schwalbenschwanzführung 48 in der einmal eingestellten Position gehalten wird. Durch die Schwalbenschwanzführung 48 selbst wird verhindert, dass die Komponente 1 seitlich gegenüber der Anlagefläche 3 verkippt werden kann. Der Vorteil dieser Halterung gegenüber der in der Fig. 1a dargestellten liegt darin, dass zur Montage kein Werkzeug erforderlich ist. Der Nachteil besteht jedoch darin, dass sich die Kugel 53 durch Belastung aus der Klebestelle lösen kann. Außerdem wird auch bei dieser Halterung ein ausreichender Einbauraum für die Blattfeder 54 hinter der Anlagefläche 3 benötigt.

Fig. 1c zeigt eine dritte Variante einer Halterung zur Befestigung einer Komponente 1 mit einem außenseitig angeordneten Schwalbenschwanzschlitten 2 gegen eine Anlagefläche 3. Hier ist vor der Anlagefläche 3 gar keine Schwalbenschwanzführung 48 mehr angeordnet. Statt dessen ist dicht vor der Anlagefläche 3 parallel zu dieser ein Bolzen 55 befestigt, der in das eine seitliche Innenprofil des Schwalbenschwanzschlittens 2 eingepaßt ist. Seitlich neben der Komponente 1 ist mit einer Schraube 56 eine gebogene Blattfeder 57 befestigt, welche seitlich gegen die Komponente 1 drückt. Der Vorteil dieser Halterung besteht darin, dass kein Platz hinter der Anlagefläche 3 benötigt wird, da alle Halterungskomponenten vor der Anlagefläche 3 angeordnet sind. Durch das Verzichten auf eine Schwalbenschwanzführung an der Anlagefläche 3 ist jedoch die Komponente 1 nicht in allen Richtungen verkippungssicher. So ist die Komponente 1 zwar sicher gegen Verkippung in Richtung der gebogenen Blattfeder 57, weil sie durch die Federkraft zurückgelenkt wird. Die Komponente 1 ist jedoch unsicher gegen Verkippungen von der Blattfeder 57 weg, weil die Komponente 1 dann verkippt bleibt und nicht wieder zurückgelenkt wird. Weitere Nachteile bestehen darin, dass durch die Blattfeder 57 seitlich neben der Komponente 1 Platz benötigt wird. Außerdem wird die Blattfeder 57 beim falschen Einsetzen bzw. Entnehmen leicht verbogen oder abgebrochen.

Es ist daher Aufgabe der vorliegenden Erfindung, eine Halterung mit sehr geringem Platzbedarf anzugeben, mit der eine Komponente mit einem außenseitig angeordneten Schwalbenschwanzschlitten ohne Werkzeug gegen eine Anlagefläche verkippungssicher und zuverlässig befestigt werden kann.

Diese Aufgabe wird gelöst, indem als zusammen wirkende Halterungskomponenten vor der Anlagefläche parallel zu ihr ein stiftförmiger Bolzen und daneben eine von ihm unter Spannung weggebogene Druckfeder befestigt sind. Der Bolzen und die Druckfeder sind von ihrem Querschnitt und ihrer Länge so bemessen, dass sie in die beiden Innenseiten des Schwalbenschwanzschlittens eingreifen können.

Die Befestigung der Komponente mit außenliegendem Schwalbenschwanzschlitten erfolgt auf die Weise, dass der Schwalbenschwanzschlitten über den Bolzen und die Druckfeder bis zum Anschlag gegen die Anlagefläche gedrückt und eingerastet wird. Dazu ist der Abstand zwischen dem Bolzen und der Druckfeder an die Innenbreite Schwalbenschwanzschlittens angepaßt, so dass durch die Spannung der gebogenen Druckfeder der Bolzen und die Druckfeder selbst zu beiden Seiten in die Innenseite des Schwalbenschwanzschlittens gepreßt werden.

Die erfindungsgemäße Halterung besitzt den Vorteil, dass sie hinter der Anlagefläche und außerhalb des Schwalbenschwanzschlittens keinen Platz für Halterungselemente benötigt und dadurch einfach in andere Geräte integriert werden kann. Sie ist preiswert und gewährleistet eine zuverlässige und in allen Richtungen kippsichere Verbindung zwischen der zu halternden Komponente und der Anlagefläche. Das Zusammenfügen der Komponente und der Halterung ist durch manuelles Andrücken einfach und ohne Werkzeug durchzuführen.

Die Befestigung der Druckfeder an der Anlagefläche kann beispielsweise durch Anschrauben erfolgen. Wird die Befestigung durch Anschrauben vorgenommen, sind dazu auf einer zu dem Bolzen parallelen Linie zwei Schrauben in die Anlagefläche eingeschraubt. Mittels dieser beiden Schrauben werden zwei Ringösen, die sich an den Enden der Druckfeder befinden, gegen die Anlagefläche geklemmt. Die Druckfeder ist im unbelasteten Zustand länger als der Abstand der beiden Schrauben, so dass sie im angeschraubten Zustand unter Spannung steht und gebogen ist. Die Feder ist erfindungsgemäß so montiert, dass sie dabei im angeschraubten Zustand vom Bolzen weggebogen ist, so dass sie in die eine Innenseite des Schwalbenschwanzschlittens eingreifen kann.

Der Bolzen kann entweder zylindrisch oder auch drei- oder mehrkantig sein. Die Befestigung des Bolzens kann beispielsweise mittels zweier Haltestifte vorgenommen werden, die senkrecht von der Anlagefläche abstehen. An diesen beiden Haltestiften werden dann die beiden Stirnflächen des Bolzens befestigt. In einer anderen Variante der Halterung sind an den beiden Stimflächen des Bolzens zwei Haltestifte befestigt, die in Richtung der Bolzenachse weisen und an einem relativ zu der Anlagefläche erhöhten Rahmen neben den beiden Bolzenenden befestigt sind. Die einfachste Befestigungsvariante erhält man, wenn der Bolzen so lang gewählt ist, dass er selbst mit seinen beiden Enden in diesen erhöhten Rahmen eingreift.

Durch eine spezielle Ausgestaltung der Druckfeder und ihrer Ringösen kann die Funktionsweise der Halterung günstig beeinflußt werden. So sind in einer vorteilhaften Ausgestaltung der Halterung die beiden Ringösen an den beiden Enden der Druckfeder jeweils am äußeren Rand der Druckfeder so befestigt, dass sie vor dem Anschrauben in einer Ebene liegen. Die beiden Ringösen werden durch zwei Schrauben, die vorzugsweise auf einer zu den Bolzen parallelen Linie angeordnet sind, gegen die Anlagefläche geklemmt. Da die Länge der unbelasteten Druckfeder größer ist als der Abstand der beiden Schrauben, wird die Druckfeder mit Spannung von dem Bolzen weggebogen. Die gekrümmte Druckfeder liegt ohne aufgedrückte Komponente mit außenliegendem Schwalbenschwanzschlitten stets flach an der Anlagefläche an.

In einer anderen Ausführungsform sind ebenfalls an den beiden Enden der Druckfeder am äußeren Rand der Druckfeder zwei Ringösen angeformt. Sie sind jedoch in diesem Fall beide vor dem Anschrauben in Richtung der Anlagefläche abgewinkelt. Auch hier wird die Druckfeder befestigt, indem die Ringösen mittels zweier Schrauben gegen die Anlagefläche geklemmt werden. Dabei ist der Abstand der Schrauben wiederum kleiner als die Länge der unbelasteten Druckfeder und die Schrauben liegen auf einer zu dem Bolzen parallelen Linie. Durch die Abwinkelung der beiden Ringösen wird bewirkt, dass nach dem Festschrauben die Druckfeder nicht nur vom Bolzen weggebogen ist, sondern zusätzlich an die Anlagefläche gedrückt wird. Dies erzeugt eine zusätzliche Kraft in Richtung der Anlagefläche.

Die erfindungsgemäße Halterung bietet eine verkippungssichere Befestigung für eine Komponente mit einem außenliegenden Schwalbenschwanzschlitten. Um zusätzlich ein Verschieben des Schwalbenschwanzschlittens in Längsrichtung des Bolzens zu verhindern, ist mit Vorteil zusätzlich auf der Anlagefläche neben mindestens einem Ende des Bolzens eine erhöhte Leiste als Anschlagssicherung angeordnet.

Wegen ihrer kompakten platzsparenden Aufbaus eignet sich die erfindungsgemäße Halterung zur Gestaltung von Mehrfach-Halterungen. So können beispielsweise auf einem Längsschieber mehrere erfindungsgemäße Halterungen nebeneinander angeordnet werden. Durch seitliches Verschieben des Längsschiebers in einer Führungsschiene kann dann eine beliebige der erfindungsgemäßen Halterungen in Funktionsstellung gebracht werden.

Eine andere Mehrfach-Halterung erhält man, indem an dem Außenumfang eines Zylinders mehrere Abflachungen vorgesehen sind, die als Anlagefläche dienen. An jeder dieser Abflachungen ist jeweils eine erfindungsgemäße Halterung angebracht. Der Zylinder ist auf einer festen Drehachse drehbar angeordnet. Auf diese Weise kann durch Drehen des Zylinders eine beliebige der erfindungsgemäße Halterungen in Funktionsstellung gebracht werden. Es erweist sich als günstig, wenn an dem Zylinder eine Drehscheibe koaxial befestigt ist, so dass der Zylinder durch manuellen oder motorischen Eingriff an der Drehscheibe drehbar ist. Wenn die an den Halterungen befestigten Komponenten optisch wirksame Bauelemente tragen, die in einen Strahlengang eingebracht werden sollen, ist mit Vorteil die Drehscheibe neben jeder Halterung mit einer Öffnung zum freien Durchtritt des Lichts ausgestattet.

Die erfindungsgemäße Halterung sowie auch die Mehrfach-Halterungen unter Verwendung der erfindungsgemäßen Halterung können vorteilhaft zur Halterung von Fluoreszenz-Filterblöcken in einem Fluoreszenzmikroskop verwendet werden, wobei die Halterung oder auch die Mehrfach-Halterung jeweils so geeignet in das Mikroskop eingefügt werden, dass die Filter in den zugeordneten Strahlengängen optisch wirksam sind.

Vorteilhafte Ausführungsbeispiele der Erfindung werden nachfolgend anhand der Zeichnung näher erläutert. Es zeigen:

*Fig. 2a:*   Seitenansicht einer erfindungsgemäßen Halterung für eine Komponente mit außenliegenden Schwalbenschwanzschlitten;

*Fig. 2b:*   Aufsicht auf eine erfindungsgemäße Halterung;

*Fig. 2c:*   Ausgestaltung einer unbelasteten Druckfeder für eine erfindungsgemäße Halterung;

*Fig. 2d:*   Eingebaute Druckfeder nach *Fig. 2c;*

*Fig. 2e:*   Andere Ausgestaltung einer unbelasteten Druckfeder für eine erfindungsgemäße Halterung;

*Fig. 2f:*   Eingebaute Druckfeder nach *Fig. 2e;*

*Fig. 2g:*   Wie *Fig. 2f*, Ansicht um 90° versetzt;

*Fig. 2h:*   Halterung mit Druckfeder nach *Fig. 2e* mit gehalterter Komponente;

*Fig. 3a:*   Seitenansicht eines Längsschiebers als Mehrfach-Halterung;

*Fig. 3b:*   Seitenansicht einer Mehrfach-Halterung in zylindrischer Grundform;

*Fig. 3c:*   Schnitt durch eine motorisch angetriebene, zylindrische MehrfachHalterung mit außerhalb der Drehachse angeordneten Antriebsmotor;

*Fig. 3d:*   Schnitt durch eine motorisch angetriebene, zylindrische MehrfachHalterung mit koaxial angeordnetem Antriebsmotor;

*Fig. 4a:*   Seitenansicht einer zylindrischen Achtfach-Halterung mit außerhalb der Drehachse angeordneten Antriebsmotor;

*Fig. 4b:*   Ansicht in Achsrichtung von unten auf die zylindrische AchtfachHalterung aus *Fig. 4a;*

*Fig. 5a:*   Schnitt durch ein Fluoreszenz-Mikroskop mit einem eingebautem Längsschieber nach *Fig. 3a*, an dem Fluoreszenz-Filterblöcke befestigt sind;

*Fig. 5b:*   Schnitt durch ein Fluoreszenz-Mikroskop mit einer eingebauten zylindrischen Mehrfach-Halterung nach *Fig. 3b*, an der Fluoreszenz-Filterblöcke befestigt sind.

*Fig. 2a* zeigt eine Seitenansicht einer erfindungsgemäßen Halterung. Eine Komponente 1 mit einem außenliegenden Schwalbenschwanzschlitten 2 liegt an einer Anlagefläche 3 eines tragenden Untergrundes an. Vor der Anlagefiäche 3 ist parallel zu ihr ein Bolzen 4 angeordnet, der in die linke Innenseite des Schwalbenschwanzschlittens 2 eingepaßt ist. Der Bolzen 4 ist an zwei Haltestiften 5 befestigt (hier im Schnitt nur einer sichtbar), die senkrecht von der Anlagefläche 3 abstehen. Ebenfalls vor der Anlagefläche 3 ist neben dem Bolzen 4 eine Druckfeder 6 angeordnet. Dazu sind zwei an ihren Enden befindliche Ringösen 7 (hier nur eine sichtbar) jeweils mittels einer Schraube 8 gegen die Anlagefläche 3 geklemmt.

Der Querschnitt und die Länge des Bolzens 4 bzw. der Druckfeder 6 sind an das Innenprofil des Schwalbenschwanzschlittens 2 angepaßt, so dass die Komponente 1 mit ihrem Schwalbenschwanzschlitten 2 über den Bolzen 4 und die Druckfeder 6 bis gegen die Anlagefläche 3 gedrückt und in der gewünschten Position sicher gehalten werden kann.

Die Druckfeder 6 ist unter Spannung vom Bolzen 4 weggebogen. Dadurch werden der Bolzen 4 und die Druckfeder 6 mit einer Kraft $\vec{F}_1$ bzw. $-\vec{F}_1$ in die beiden Innenseiten des Schwalbenschwanzschlittens 2 gepreßt. Diese Kräfte sorgen für eine verkippungssichere Befestigung der Komponente 1 gegen die Anlagefläche 3. Die Druckfeder 6 liegt ohne die aufgedrückte Komponente 1 flach vor der Anlagefläche 3 und wird erst durch die aufgedrückte Komponente 1 von der Anlagefläche 3 hochgebogen. Dadurch entsteht zusätzlich ein leichter Zug in Richtung der Anlagefläche 3, wodurch die Komponente 1 auch in der hier dargestellten hängenden Position sicher gehalten wird.

*Fig. 2b* zeigt in der Aufsicht eine erfindungsgemäße Halterung, bestehend aus einem Bolzen 4 und einer Druckfeder 6 in erfindungsgemäßer Anordnung zueinander.

Der Bolzen 4 ist vor einer Anlagefläche (nicht dargestellt) angeordnet. An beiden Enden des Bolzens 4 ist jeweils eine über der Anlagefläche erhöhte Leiste 9 angeordnet. Sie dient zur Befestigung des Bolzens 4, dessen Enden durch Bohrungen 10 in den beiden Leisten 9 durchgeführt sind. Auf diese Weise wird der Bolzen 4 in einem kleinen Abstand vor der Anlagefläche gehalten, der für die Befestigung einer Komponente 1 mit außenliegendem Komponente 1 erforderlich ist.

Neben dem Bolzen 4 ist die Druckfeder 6 an der Anlagefläche befestigt. Dazu sind zwei Schrauben 8 durch die an den Enden der Druckfeder 6 angeformten Ringösen 7 geführt, welche die Ringösen 7 gegen die Anlagefläche klemmen. Die beiden Schrauben 8 sind auf einer zu dem Bolzen 4 parallelen Geraden in die Anlagefläche eingeschraubt. Die Druckfeder 6 ist mit Spannung von dem Bolzen 4 weggebogen. Die Spannung wird dadurch erzeugt, dass die Druckfeder 6 im entspannten Zustand länger ist als der Abstand der beiden Schrauben 8 in der Anlagefläche.

Eine Komponente (nicht dargestellt) mit außenliegendem Schwalbenschwanzschlitten kann über den Bolzen 4 und die Druckfeder 6 bis zum Anschlag an die Anlagefläche gedrückt werden, bis der Bolzen 4 und die Druckfeder 6 in die Innenseiten der Schwalbenschwanzführung eingreifen und durch die Spannung der gebogenen Druckfeder 6 in diese Innenseiten des Schwalbenschwanzschlittens gepreßt werden. Die Komponente wird dann von dem Bolzen 4 und der Druckfeder 6 gehalten und an die Anlagefläche angedrückt. Gleichzeitig wird eine befestigte Komponente durch die beiden erhöhten Leisten 9 gegen Abrutschen von dem Bolzen 4 gesichert, d.h. gegen Abrutschen durch beispielsweise versehentliches Verschieben der Komponente in Längsrichtung des Bolzens 4.

*Fig. 2c* zeigt eine Ausgestaltung einer unbelasteten Druckfeder 6 für eine erfindungsgemäße Halterung. Die Druckfeder 6 weist an beiden Enden zwei Ringösen 7 auf, die jeweils am äußeren Rand angeformt sind und die in ein und derselben Ebene liegen. Die unbelastete Druckfeder 6 kann daher mit beiden Ringösen 7 flach auf einem Untergrund aufliegen.

*Fig. 2d* zeigt die Druckfeder 6 aus *Fig. 2c* im eingebauten Zustand. Die Druckfeder 6 ist vor einer Anlagefläche 3 befestigt, indem die Ringösen 7 an ihren Enden mit zwei Schrauben 8 flach gegen die Anlagefläche 3 geklemmt werden. Dazu sind die beiden Schrauben 8 auf einer zu dem Bolzen 4 (nicht dargestellt) parallelen Geraden in die Anlagefläche 3 eingeschraubt. Der Abstand der Schrauben 8 ist kürzer als die Länge der unbelasteten Druckfeder 6, so dass die Druckfeder 6 unter Spannung vom Bolzen 4 weggebogen ist.

*Fig. 2e* zeigt eine andere Ausgestaltung einer unbelasteten Druckfeder 6 für eine erfindungsgemäße Halterung. Die Druckfeder 6 weist ebenfalls an beiden Enden zwei Ringösen 7 auf, die jeweils am äußeren Rand angeformt sind. Die beiden Ringösen 7 sind zu derselben Seite hin angewinkelt, so dass sie beide einen Winkel bilden, d. h. in zwei Ebenen liegen. Die unbelastete Druckfeder 6 kann daher mit den beiden Ringösen 7 nicht flach auf einem Untergrund aufliegen.

*Fig. 2f* zeigt die Druckfeder 6 aus *Fig. 2e* im eingebauten Zustand in Seitenansicht von der Längsseite aus. Die Druckfeder 6 ist vor einer Anlagefläche 3 befestigt, indem die angewinkelten Ringösen 7 an ihren Enden mit zwei Schrauben 8 gegen die Anlagefläche 3 geklemmt werden. Dazu sind die beiden Schrauben 8 auf einer zu dem (hier nicht dargestellten) Bolzen 4 parallelen Geraden in die Anlagefläche 3 eingeschraubt. Beim Festschrauben wird die Druckfeder 6 von dem Bolzen 4 weggebogen. Zusätzlich wird sie im mittleren Bereich schräg zur Anlagefläche 3 hingebogen, während gleichzeitig die Enden der Druckfeder 6 durch die abgewinkelten Ringösen 7 hochgedrückt bleiben. Die beiden Schrauben 8 werden dazu soweit in die Anlagefläche 3 hineingeschraubt, bis die angewinkelten Ringösen 7 weitgehend flach gegen die Anlagefläche 3 geklemmt werden. Dadurch wird der mittlere Teil der Druckfeder 6 mit einer starken Kraft $\vec{F}_2$ gegen die Anlagefläche 3 gepreßt.

*Fig. 2g* zeigt die Druckfeder 6 aus *Fig. 2f* im eingebauten Zustand in der Seitenansicht von einem Ende aus. Die Enden der Ringösen 7 der Druckfeder 6 werden mittels Schrauben 8 gegen eine Anlagefläche 3 gepreßt. Die Druckfeder 6 ist unter Spannung von einem daneben befestigten Bolzen 4 weggebogen und zugleich unter Spannung gegen die Anlagefläche 3 gebogen.

*Fig. 2h* zeigt eine erfindungsgemäße Halterung mit einem vor einer Anlagefläche 3 mittels Haltestiften 5 befestigten Bolzen 4 und einer Druckfeder 6 mit angewinkelten Ringösen 7, wie sie in *Fig. 2e, f und g* gezeigt ist. Die Druckfeder 6 ist vom Bolzen 4 weggebogen, wodurch die Druckfeder 6 mit einer Kraft $\vec{F}_1$ und der Bolzen 4 mit einer Kraft -$\vec{F}_1$ in die beiden Innenseiten des Schwalbenschwanzschlittens 2 gepreßt werden. Wie in *Fig. 2e* sind die angewinkelten Ringösen 7 mittels Schrauben 8 fast ganz gegen die Anlagefläche 3 geklemmt, wodurch die Druckfeder 6 mit einer Kraft $\vec{F}_2$ in Richtung der Anlagefläche 3 in die Innenseite des Innenprofils des Schwalbenschwanzschlittens gedrückt wird.

Eine auf den Bolzen 4 und die Druckfeder 6 aufgedrückte Komponente 1 mit außenliegendem Schwalbenschwanzschlitten 2 wird von der Druckfeder 6 mit einer zusätzlichen Kraft $\vec{F}_2$ gegen die Anlagefläche 3 gepreßt. Dadurch wird die Verbindung zwischen der Anlagefläche 3 und der gehalterten Komponente 1 noch sicherer gegen Verkippen und Zugbelastung der Komponente 1 gegenüber einer Halterung, die nur eine Druckfeder 6 mit nicht angewinkelten Ringösen 7 aufweist.

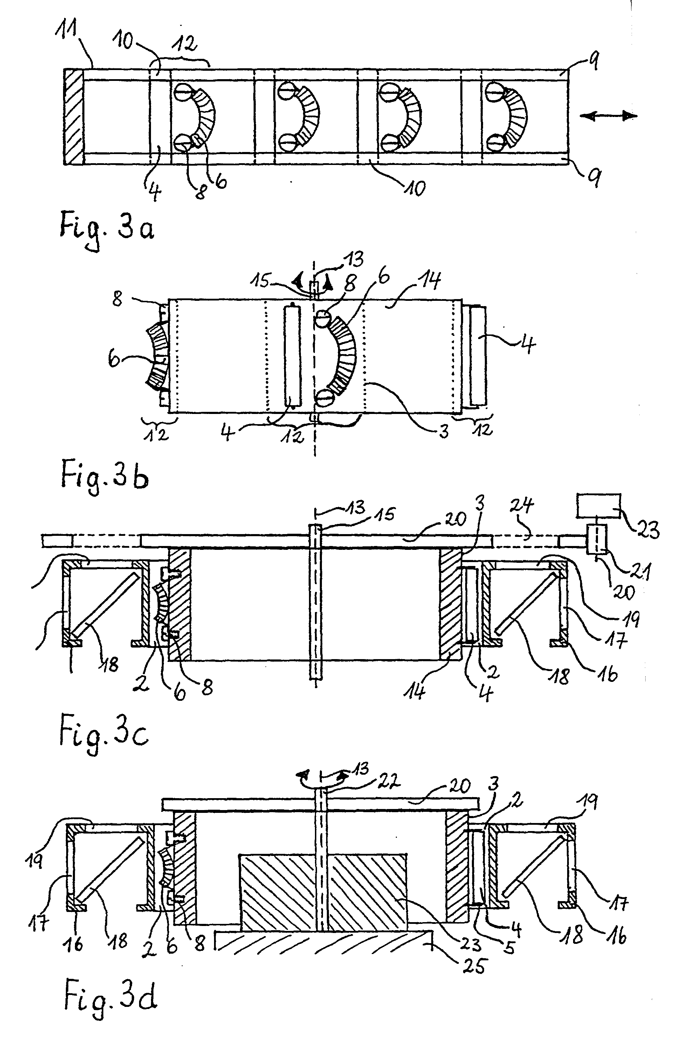

*Fig. 3a* zeigt eine Mehrfach-Halterung in Form eines Längsschiebers 11. Auf diesem sind nebeneinander mehrere erfindungsgemäße Halterungen 12 angebracht, die jeweils einen Bolzen 4 und eine Druckfeder 6 nebeneinander in erfindungsgemäßer Anordnung aufweisen.

Jede Druckfeder 6 ist mit zwei Schrauben 8 so an dem Längsschieber 11 befestigt, dass sie von dem Bolzen 4 unter Spannung weggebogen ist. An den beiden Außenkanten des Längsschiebers 11 sind in Längsrichtung zwei erhöhte Leisten 9 angeordnet. Diese beiden Leisten 9 weisen mehrere Bohrungen 10 auf, in welche die Enden der Bolzen 4 eingefügt sind, wodurch die Bolzen 4 befestigt sind. Zusätzlich ist eine Komponente, die mit ihrem außenliegenden Schwalbenschwanzschlitten auf den Bolzen 4 und die Druckfeder 6 aufgedrückt wurde, durch beiden erhöhten Leisten 9 gegen Abrutschen von dem Bolzen 4 gesichert.

Durch Verschieben des Längsschiebers 11 in der dargestellten Pfeilrichtung , was entweder manuell oder motorisch erfolgen kann, kann eine bestimmte der Halterungen 12 in Funktionsstellung gebracht werden. Diese Funktionstellung besteht in einer geeigneten Position des Längsschiebers 11, in der beispielsweise an der in Funktionsstellung gebrachten Halterung 12 eine Komponente 1 befestigt werden kann oder in der eine bereits an dieser Halterung 12 befestigte Komponente 1 ihre Funktion (z.B. als Werkzeug in einer Maschine oder als optische Komponente 1 in einem optischen Strahlengang) ausüben kann.

*Fig. 3b* zeigt eine Mehrfach-Halterung, bei der auf einer festen Drehachse 13 ein Zylinder 14 drehbar angeordnet ist. Der Zylinder 14 weist an seinem Außenumfang vier Abflachungen auf, die als Anlageflächen 3 dienen. Die Begrenzung der Anlageflächen 3 ist durch punktierte Linien markiert. An jeder Anlagefläche 3 ist eine erfindungsgemäße Halterung 12 aus jeweils einem Bolzen 4 und einer Druckfeder 6 in erfindungsgemäßer Anordnung angebracht.

In der Mitte ist eine Halterung 12 in der Aufsicht dargestellt, so dass ihre zugehörige Kombination aus Bolzen 4 und Druckfeder 6 sichtbar ist. Die Halterungen 12 auf der linken Seite und der rechten Seite sind jeweils in Seitenansicht dargestellt, so dass bei der linken Halterung 12 der zugehörige Bolzen 4 verdeckt und nur die Druckfeder 6 sichtbar ist. An der rechten Halterung 12 ist der Bolzen 4 sichtbar und die zugehörige Druckfeder 6 verdeckt. Eine vierte Halterung liegt auf der Rückseite des Zylinders 14 und ist daher ganz verdeckt. Durch Drehen des Zylinders 14 um die zur Drehachse 13 konzentrische Zylinderachse 15 kann eine beliebige der vier Halterungen 12 in eine bestimmte Position und damit in Funktionsstellung gebracht werden.

*Fig. 3c* zeigt einen Schnitt durch eine zylindrische Mehrfach-Halterung, die motorisch angetrieben ist. Dazu ist ein Zylinder 14 auf einer feststehenden Zylinderachse 15 mit einer Drehachse 13 drehbar angeordnet. Der Zylinder 14 weist an seinem Außenumfang mehrere Abflachungen auf, die als Anlagefläche 3 dienen und an denen mehrere erfindungsgemäße Halterungen angebracht sind. An der rechten Seite des Zylinders 14 ist von der dort angeordneten Halterung ein mit Haltestiften 5 befestigter Bolzen 4 dargestellt, der in einen außenliegenden Schwalbenschwanzschlitten 2 einer Komponente 1 eingreift. Bei dieser Komponente 1 handelt es sich um einen würfelförmigen Fluoreszenz-Filterblock 16, der ein Anregungsfilter 17, einen Strahlteiler 18 und einen Sperrfilter 19 aufweist, die in bekannter Form einen rechtwinklig T-förmig verlaufenden Strahlengang definieren. Ein solcher Fluoreszenz-Filterblock 16 wird üblicherweise in einem Fluoreszenzmikroskop zur Erzeugung der gewünschten Beleuchtung benutzt.

An der linken Seite des Zylinders 14 ist eine weitere erfindungsgemäße Halterung dargestellt, von der nur eine mit Schrauben 8 befestigte Druckfeder 6 zu sehen ist. Diese Halterung greift in einen Schwalbenschwanzschlitten 2 ein, der an der Außenseite einer Komponente 1 angebracht ist. Bei der Komponente 1 handelt es sich ebenfalls um einen würfelförmigen Fluoreszenz-Filterblock 16 mit Anregungsfilter 17, Strahlteiler 18 und Sperrfilter 19. Zwei weitere, vor und hinter der Schnittebene befestigte Fluoreszenzfilterblöcke erscheinen in der Darstellung nicht.

Auf der Zylinderachse 15 ist koaxial eine Drehscheibe 20 befestigt. Der Durchmesser der Drehscheibe 20 ist so groß gewählt, dass sie über den Zylinder 14 samt dem an ihm befestigten Fluoreszenz-Filterblock 16 hinausragt. Dadurch kann im Randbereich der Drehscheibe 20 eingegriffen werden, um sie samt Zylinder 14 in Drehung zu versetzen. Dieser Eingriff kann grundsätzlich auch manuell erfolgen. Im hier dargestellten Ausführungsbeispiel weist jedoch die Drehscheibe 20 an ihrem äußeren Rand eine Zahnung (hier nicht dargestellt) auf, in welche ein Ritzel 21 eingreift, das auf einer Motorachse 22 eines elektrischen Antriebsmotors 23 angeordnet ist. Dieser Antriebsmotor 23 kann beispielsweise ein Gleichstrom-Motor oder ein Schrittmotor sein. Neben den Sperrfiltern 19 der vier gehalterten Fluoreszenzfilterblöcke 16 weist die Drehscheibe 20 jeweils eine freie Öffnung 24 auf, um den dort entlang geführten Lichtstrahl ungehindert durchzulassen.

*Fig. 3d* zeigt eine andere Variante einer Mehrfach-Halterung in zylindrischer Grundform, die motorisch um eine Drehachse 13 drehbar ist. Ein elektrischer Antriebsmotor 23 ist auf einem Untergrund 25 feststehend angeordnet und weist eine drehbare Motorachse 22 mit einer Drehachse 13 auf. Koaxial zur Motorachse 22 sind ein Zylinder 14 und eine Drehscheibe 20 angeordnet, wobei die Drehscheibe 20 mit dem Zylinder 14 fest verbunden ist. Diese Drehscheibe 20 sitzt fest auf der Motorachse 22 und wird bei einer Drehung der Motorachse 22 mitgedreht. Auf diese Weise kann der gesamte Zylinder 14 in eine beliebige Position gedreht werden.

Der Zylinder 14 weist an seinem Außenumfang Abflachungen auf, die als Anlagefläche 3 für mehrere erfindungsgemäße Halterungen dienen. So ist an der rechten Seite eine Halterung angeordnet, von der in der Darstellung nur ein Bolzen 4 sichtbar ist. Diese Halterung greift in einen Schwalbenschwanzschlitten 2 ein, der an der Außenseite einer Komponente angeordnet ist. Bei dieser Komponente handelt es sich um einen würfelförmigen Fluoreszenz-Filterblock 16 mit einem Anregungsfilter 17, einem Strahlteiler 18 und einem Sperrfilter 19, durch welche in bekannter Weise ein rechtwinklig T-förmig verlaufender Strahlengang definiert ist.

An der linken Seite des Zylinders 14 ist eine weitere Halterung angeordnet, von der lediglich eine mit Schrauben 8 befestigte Druckfeder 6 zu erkennen ist. Der zugehörige Bolzen liegt nicht in der Zeichnungsebene. Auch an dieser Halterung ist eine Komponente befestigt, in deren außenliegenden Schwalbenschwanzschlitten 2 die Druckfeder 6 und der (nicht sichtbare) Bolzen eingreifen. Bei dieser Komponente handelt es sich ebenfalls um einen würfelförmigen Fluoreszenz-Filterblock 16 mit einem Anregungsfilter 17, einem Strahlteiler 18 und einem Sperrfilter 19 in bekannter Anordnung. Eine an der Vorderseite des Zylinders 14 angeordnete dritte Halterung sowie eine an der Rückseite des Zylinders 14 angeordnete vierte Halterung sind in dieser Schnittzeichnung nicht erkennbar.

Durch Drehen des Zylinders 14 mittels des Antriebsmotors 23 kann jeweils eine der vier Halterungen in eine gewünschte Funktionsstellung gebracht werden, in der beispielsweise der an der Halterung befestigte Fluoreszenzwürfel in einem vorbestimmten Strahlengang liegt.

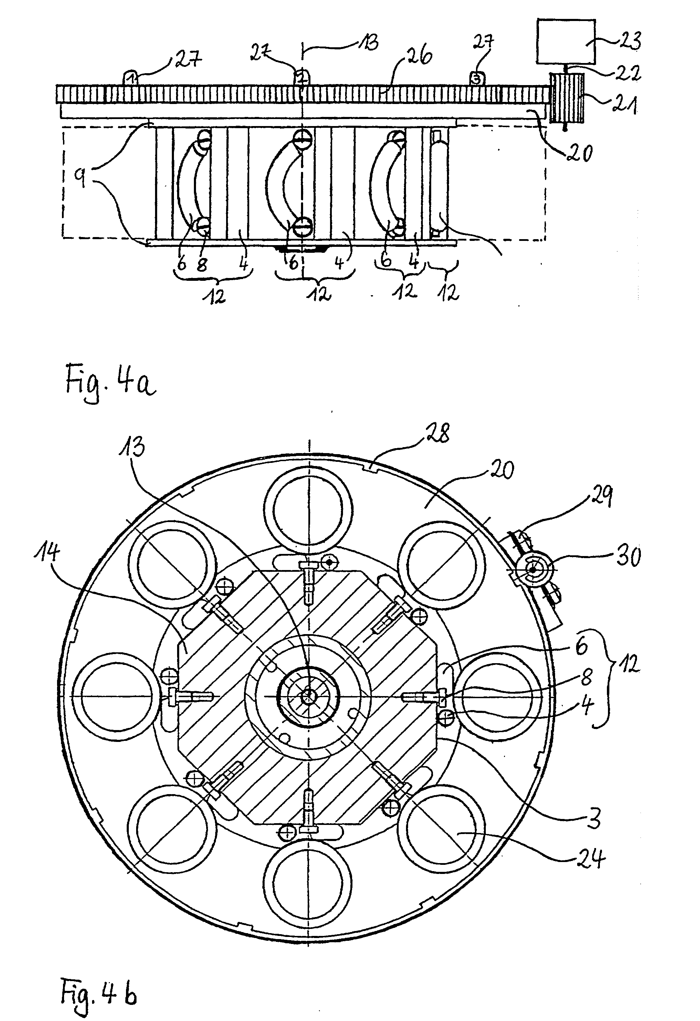

Fig. 4a zeigt eine Seitenansicht einer zylindrischen Achtfach-Halterung mit einem außerhalb eines Zylinders 14 angeordneten elektrischen Antriebsmotor 23. An dem Zylinder 14 sind an seinem Außenumfang acht Abflachungen vorgesehen, die als Anlagefläche für mehrere erfindungsgemäße Halterungen 12 dienen. In der hier gewählten Seitenansicht sind drei Halterungen 12 aus jeweils einer erfindungsgemäßen Kombinationen aus einer Druckfeder 6 und einem Bolzen 4 sichtbar. Von einer vierten Halterung 12 an der rechten Seite ist in dieser Darstellung lediglich eine Druckfeder 6 zu erkennen. Die Druckfedern 6 sind jeweils mit zwei Schrauben 8 so an dem Zylinder 14 verschraubt, dass sie unter Spannung von dem jeweils zugehörigen Bolzen 4 weggebogen und zugleich gegen die Anlagefläche vorgespannt sind.

Der Zylinder 14 weist eine Drehachse 13 auf, auf der eine Drehscheibe 20 koaxial angeordnet ist. In der Darstellung ist der für die zu befestigenden Komponenten vorgesehene Raum gestrichelt markiert. Der Durchmesser der Drehscheibe 20 ist so groß gewählt, dass sie über diesen Raum hinausragt. Oberhalb und unterhalb der Halterungen 12 weist der Zylinder 14 zwei erhöhte Leisten 9 auf, die als Anschlagsicherung für die zu befestigenden Komponenten dienen und ein Abrutschen der an den Halterungen 12 befestigten Komponenten von den Bolzen 4 verhindert.

Die Drehscheibe 20 weist an ihrem äußeren Rand eine Zahnung 26 auf, in welche ein Ritzel 21 eingreift, welches auf einer Motorachse 22 des elektrischen Antriebsmotors 23 angeordnet ist. Mittels des Antriebsmotors 23 kann der Zylinder 14 in jede gewünschte Position und damit jede der Halterungen 12 in eine bestimmte Funktionsstellung gedreht werden. Zusätzlich sind an der Drehscheibe 20 ablesbare Codierungen 27 angebracht, die den Halterungen 12 und einer bestimmten Funktionsstellung zugeordnet sind. Befindet sich beispielsweise die linke Halterung 12 in der gewünschten Funktionsstellung, erscheint die dieser Halterung zugeordnete Codierung 27 mit der Ziffer "1" in einer zur Ablesung vorbestimmten Position, z.B. in der Figur links.

Fig. 4b zeigt eine Ansicht der zylindrischen Achtfach-Halterung aus Fig. 4a mit Blickrichtung von unten. Ein Zylinder 14 ist auf einer festen Drehachse 13 drehbar gelagert und weist an seinem Außenumfang acht Abflachungen auf. Jede Abflachung dient als Anlagefläche 3 für eine erfindungsgemäße Halterung 12, jeweils bestehend aus einem Bolzen 4 und einer Druckfeder 6. Dabei wird jede Druckfeder 6 mittels zweier Schrauben 8 gegen die zugehörige Anlagefläche 3 gepreßt und dabei zugleich vom Bolzen 4 weggebogen.

Eine unterhalb des Zylinders 14 koaxial angeordnete Drehscheibe 20 weist neben jeder Halterung 12 eine freie Öffnung 24 auf. Damit eignen sich die Halterungen 12 zur Befestigung von Fluoreszenz-Filterblökken, wie dies bereits bei Fig. 3c und Fig. 3d beschrieben wurde. Am äußeren Rand der Drehscheibe 20 ist eine Zahnung 26 angebracht, die in dieser Darstellung vereinfachend als dick ausgezogene Linie dargestellt ist. In diese Zahnung 26 greift ein Ritzel 21 auf einer Motorachse 22 eines elektrischen Antriebsmotors 23 ein, um den Zylinder 14 um seine Drehachse 13 zu drehen.

Am Außenrand der Drehscheibe 20 sind Rastnuten 28 vorgesehen, in welche jeweils eine Rastvorrichtung 29 eingreifen kann. Nachdem der Zylinder 14 mit dem Antriebsmotor 23 in eine gewünschte Funktionsstellung gedreht wurde, greift die Rastvorrichtung 29 in eine dieser Funktionsstellung zugeordnete Rastnute 28. Die Rastvorrichtung 29 weist dazu ein federgelagertes Kugellager 30 auf, das in Richtung der Drehscheibe 20 vorgespannt ist und in die jeweilige Rastnut 28 gedrückt wird. Mit Hilfe der Rastvorrichtung 29 können daher die an dem Zylinder 14 angeordneten Halterungen 12 in ihren vordefinierten Funktionsstellungen gehalten werden.

Fig. 5a zeigt einen Schnitt durch ein Fluoreszenzmikroskop 31 mit einem eingebauten Längsschieber 11 nach Fig. 3a, an dem nebeneinander mehrere Fluoreszenzfilterblöcke 16 befestigt sind. Von diesen liegt ein Fluoreszenz-Filterblock 16 in der Zeichnungsebene.

Das Fluoreszenzmikroskop 31 weist ein Lampenhaus 32 mit eingebauter Lichtquelle 33, einen Tubus 34 mit Okularen 35 sowie einen Objekttisch 36 und einen Z-Triebknopf 37 zur Höhenverstellung des Objekttisches 36 auf. An einem Objektivrevolver 38 sind mehrere Objektive 39 angesetzt, von denen eines als Arbeitsobjektiv in die optische Achse 40 geschwenkt ist. Von der Lichtquelle 33 geht ein Beleuchtungsstrahlengang aus, der durch Blenden 41a, b und eine Beleuchtungsoptik 42 geführt wird, an einem Strahlteiler 18 eines würfelförmigen Fluoreszenz-Filterblock 16 umgelenkt und durch das Objektiv 39 auf ein auf dem Objekttisch 36 aufliegendes Objekt 43 fokussiert wird. Der von diesem Objekt 43 ausgehende Abbildungsstrahlengang durchläuft den Strahlteiler 18 und das Sperrfilter 19 und wird dann an einem Prisma 44 umgelenkt und durch eine Tubusoptik 45 in eine Zwischenbildebene 46 abgebildet. Diese wird mit den Okularen 35 betrachtet.

Der Fluoreszenz-Filterblock 16 trägt in bekannter Weise den Strahlteiler 18, das Anregungsfilter 17 im Beleuchtungsstrahlengang und das Sperrfilter 19 im Abbildungsstrahlengang. An dem Fluoreszenz-Filterblock 16 ist außenseitig ein Schwalbenschwanzschlitten 2 angebracht, in den eine erfindungsgemäße Halterung eingreift, welche an dem Längsschieber 11 montiert ist. Der Längsschieber 11 weist nebeneinander mehrere erfindungsgemäße Halterungen mit daran befestigten Fluoreszenz-Filterblöcken 16 auf. Von der Halterung in der Zeichnungsebene ist nur ein Bolzen 4 sichtbar. Jeweils einer der Fluoreszenzfilterblöcke 16 kann durch geeignetes Verschieben des Längsschiebers 11 in den Beleuchtungs- bzw. Abbildungsstrahlengang so eingefügt werden, dass sein Anregungsfilter 17 in dem Beleuchtungsstrahlengang und sein Sperrfilter 19 in dem Abbildungsstrahlengang angeordnet ist.

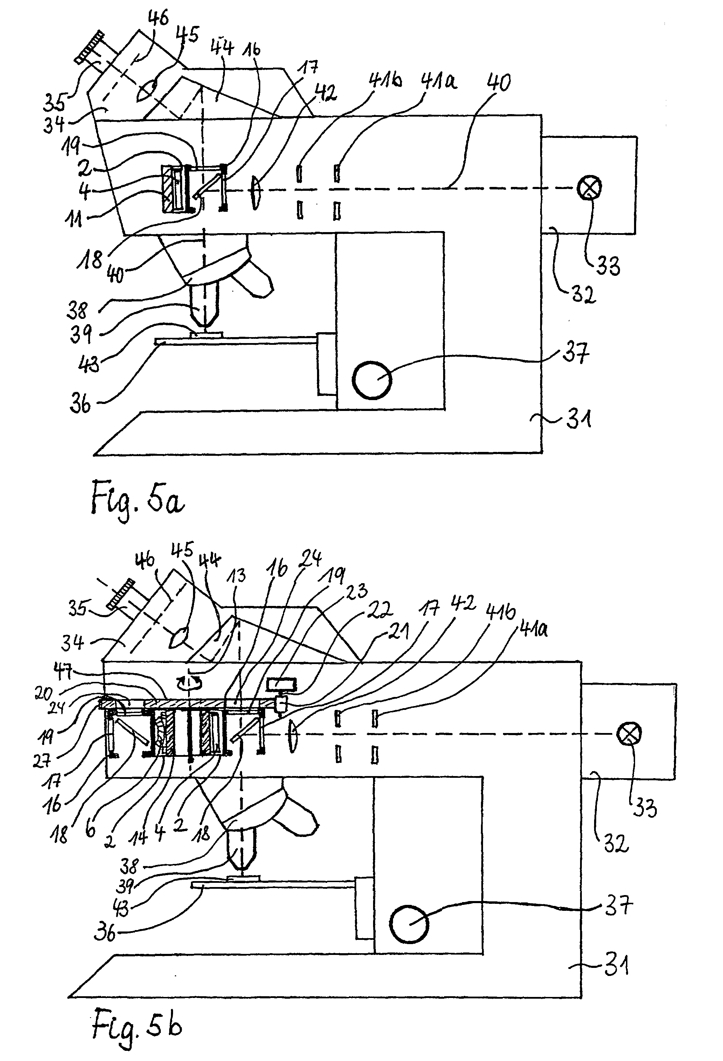

*Fig. 5b* zeigt einen Schnitt durch ein Fluoreszenzmikroskop 31 mit einer eingebauten zylindrischen Mehrfach-Halterung 47, an der mehrere Fluoreszenzfilterblöcke 16 befestigt sind. Das Fluoreszenzmikroskop 31 besitzt ein Lampenhaus 32 mit integrierter Lichtquelle 33, einen Tubus 34 mit Okularen 35 sowie einen Objektivrevolver 38 mit einem in die optische Achse eingeschwenktem Objektiv 39. Unter dem Objektiv 39 liegt ein Objekt 43 auf einem Objekttisch 36, der mit einem Z-Triebknopf 37 höhenverstellbar ist.

Von der Lichtquelle 33 geht ein Beleuchtungsstrahlengang aus, der durch Blenden 41a, b, eine Beleuchtungsoptik 42 und ein Anregungsfilter 17 geführt, an einem Strahlteiler 18 umgelenkt und durch das Objektiv 39 auf das Objekt 43 fokussiert wird. Der vom Objekt 43 ausgehende Abbildungsstrahlengang durchläuft das Objektiv 39, den Strahlteiler 18, das Sperrfilter 19 und wird an einem Prisma 44 umgelenkt und durch eine Tubusoptik 45 in eine Zwischenbildebene 46 abgebildet. Dieses Bild kann mit den Okularen 35 betrachtet werden.

Der rechts angeordnete würfelförmige Fluoreszenz-Filterblock 16, der den Strahlteiler 18, das Anregungsfilter 17 im Beleuchtungsstrahlengang und das Sperrfilter 19 im Abbildungsstrahlengang trägt, weist einen außenliegenden Schwalbenschwanzschlitten 2 auf. Er ist an einer erfindungsgemäßen Halterung befestigt, die Bestandteil der zylindrischen Mehrfach-Halterung 47 ist. Von der Halterung ist nur der Bolzen 4 zu sehen, der in den Schwalbenschwanzschlitten 2 eingreift.

Die Mehrfachhalterung 47 besteht aus einem Zylinder 14, der um eine Drehachse 13 drehbar gelagert ist. Er weist an seinem Außenumfang mehrere als Anlagefläche dienende Abflachungen auf, an den mehrere erfindungsgemäße Halterungen mit daran befestigten Fluoreszenz-Filterblöcken 16 angeordnet sind. In der Schnittdarstellung ist hier jeweils links und rechts eine entndungsgemäße Halterung dargestellt, die jeweils in einen Schwalbenschwanzschlitten eines an der Halterung befestigten Fluoreszenz-Filterblock 16 eingreift. Von der linken Halterung ist nur eine Druckfeder 6 und von der rechten Halterung ein Bolzen 4 zu sehen. Jeder Fluoreszenz-Filterblock 16 weist in bekannter Weise ein Anregungsfilter 17, einen Strahlteiler 18 und ein Sperrfilter 19 auf. Auf der Drehachse 13 des Zylinders 14 ist koaxial eine Drehscheibe 20 befestigt, die neben jedem Sperrfilter 19 eine freie Öffnung 24 zum ungehinderten Durchtritt des Abbildungsstrahlengangs aufweist.

Die Drehscheibe 20 weist am äußeren Rand eine Zahnung auf, in die ein Ritzel 21 eingreift, das auf einer Motorachse 22 eines elektrischen Antriebsmotors 23 aufgesetzt ist. Die Drehscheibe 20 ragt an der einem Mikroskopbenutzer zugewandten Vorderseite des Stativs, d.h. links in dieser Figur, um ein kleines Stück aus dieser dem Mikroskopbenutzer zugewandten Stativgehäusefläche hervor. Dafür ist eigens für diesen Zweck eine Gehäuseöffnung vorgesehen. Der dort für den Mikroskopbenutzer sichtbare Teil der Drehscheibe 20 trägt eine ablesbare Codierung 27, welche Auskunft über den aktuell in den Beleuchtungs- bzw. Abbildungsstrahlengang eingeschwenkten Fluoreszenz-Filterblock 16 gibt. Wird mittels des Antriebsmotors 23 eine Drehung des Zylinders 14 vorgenommen und dadurch ein anderer Fluoreszenz-Filterblock 16 in den Beleuchtungs- und Abbildungsstrahlengang geschwenkt, so erscheint in der Gehäuseöffnung die jeweils zugehörige Codierung 27 des im Strahlengang liegenden Fluoreszenz-Filterblock 16.

Die Zuordnung zwischen der Codierung 27, zum Beispiel einem Nummerncode, und den auf den einzelnen Halterungen der Mehrfach-Halterung befestigten Fluoreszenzfilterblöcken 16 wird entweder bereits beim Hersteller des Fluoreszenzmikroskops 31 vorgenommen oder kann zu Beginn der Arbeiten vom Mikroskopbenutzer selbst festgelegt werden.

**Bezugszeichenliste**

| | |
|---|---|
| 1 | Komponente |
| 2 | Schwalbenschwanzschlitten |
| 3 | Anlagefläche |
| 4 | Bolzen |
| 5 | Haltestifte |
| 6 | Druckfeder |
| 7 | Ringösen |
| 8 | Schrauben |
| 9 | erhöhte Leiste |
| 10 | Bohrungen |
| 11 | Längsschieber |
| 12 | Halterung |

| 13 | Drehachse |
| 14 | Zylinder |
| 15 | Zylinderachse |
| 16 | Fluoreszenz-Filterblock |
| 17 | Anregungsfilter |
| 18 | Strahlteiler |
| 19 | Sperrfilter |
| 20 | Drehscheibe |
| 21 | Ritzel |
| 22 | Motorachse |
| 23 | elektrischer Antriebsmotor |
| 24 | freie Öffnung |
| 25 | Untergrund |
| 26 | Zahnung |
| 27 | Codierungen |
| 28 | Rastnuten |
| 29 | Rastvorrichtung |
| 30 | federgelagertes Kugellager |
| 31 | Fluoreszenzmikroskop |
| 32 | Lampenhaus |
| 33 | Lichtquelle |
| 34 | Tubus |
| 35 | Okulare |
| 36 | Objekttisch |
| 37 | Z-Triebknopf |
| 38 | Objektivrevolver |
| 39 | Objektiv |
| 40 | optische Achse |
| 41a,b | Blenden |
| 42 | Beleuchtungsoptik |
| 43 | Objekt |
| 44 | Prisma |
| 45 | Tubusoptik |
| 46 | Zwischenbildebene |
| 47 | zylindrische Mehrfachhalterung |
| 48 | Schwalbenschwanzführung |
| 49 | Drehteil mit Konus |
| 50 | Rückstellfeder |
| 51 | Kegelnut |
| 52 | Madenschraube |
| 53 | Kugel |
| 54 | Blattfeder |
| 55 | Bolzen |
| 56 | Schraube |
| 57 | gebogene Blattfeder |

## Patentansprüche

1. Halterung (12) zur Befestigung einer Komponente (1) mit einem außenseitig an ihr angeordneten, symmetrischen Schwalbenschwanzschlitten (2) gegen eine Anlagefläche (3),
**dadurch gekennzeichnet,**
**dass** nahe vor der Anlagefläche (3) parallel zu ihr ein stiftförmiger Bolzen (4) und daneben eine unter Spannung von ihm weggebogene Druckfeder (6) befestigt sind, wobei der Bolzen (4) und die Druckfeder (6) durch die Spannung der gebogenen Druckfeder (6) in die beiden Innenseiten eines gegen die Anlagefläche (3) gedrückten Schwalbenschwanzschlittens (2) gepreßt werden.

2. Halterung (12) nach Anspruch 1,
**dadurch gekennzeichnet,**
**dass** die Druckfeder (6) nicht nur vom Bolzen (4) weggebogen ist, sondern zusätzlich in ihrem mittleren Bereich an die Anlagefläche (3) gedrückt wird, indem an den beiden Enden der Druckfeder (6) am äußeren Rand zwei Ringösen (7) angeformt sind, die in Richtung der Anlagefläche (3) abgewinkelt sind und die mittels zweier Schrauben (8), welche auf einer zu dem Bolzen (4) parallelen Linie angeordnet sind, nur an ihren Enden flach gegen die Anlagefläche (3) geklemmt werden.

3. Mehrfachhalterung
wobei
ein bewegliches Tragelement (11; 14) mit mehreren Anlageflächen (3) vorgesehen ist, an denen mehrere Halterungen (12) nach Anspruch 1, zur Befestigung einer Komponente (1) mit einem außenseitig angeordneten, symmetrischen Schwalbenschwanzschlitten (2) gegen diese Anlagefläche (3) angeordnet sind, wobei vor jeder Anlagefläche (3) parallel zu ihr ein stiftförmiger Bolzen (4) und daneben eine unter Spannung von ihm weggebogene Druckfeder (6) befestigt sind, wobei der Botzen (4) und die Druckfeder (6) durch die Spannung der gebogenen Druckfeder (6) in die beiden Innenseiten eines gegen die Anlagefläche (3) gedrückten Schwalbenschwanzschlittens (2) gepresst werden, und dass durch Bewegen des Tragelements (11; 14) eine beliebige der Halterungen (12) in Funktionsstellung gebracht werden kann.

4. Fluoreszenz-Mikroskop (31) mit einem auf ein Objekt (43) gerichteten Beleuchtungsstrahlengang und einem von dem Objekt (43) ausgehenden Abbildungsstrahlengang,
**dadurch gekennzeichnet, dass**
mindestens eine Halterung (12) nach Anspruch 1 vorgesehen ist, an der ein Fluoreszenz-Filterblock (16) mit einem Anregungsfilter (17), senkrecht dazu einem Sperrfilter (19) und einem unter 45° schräg dazwischen liegenden Strahlteiler (18) befestigt ist, wobei die Halterung (12) so angeordnet ist, dass das Anregungsfilter (17) in dem Beleuchtungsstrahlengang und das Sperrfilter (19) in dem Abbildungsstrahlengang liegt.

5. Fluoreszenz-Mikroskop (31) mit einem auf ein Objekt (43) gerichteten Beleuchtungsstrahlengang und einem von dem Objekt (43) ausgehenden Abbildungsstrahlengang,
**dadurch gekennzeichnet, dass**

eine Mehrfachhalterung nach Anspruch 3 mit mehreren daran befestigten Fluoreszenz-Filterblöcken (16) integriert ist, wobei ein durch Bewegen des Tragelements (11; 14) in Funktionsstellung gebrachter Fluoreszenz-Filterblock (16) so angeordnet ist, dass sein Anregungsfilter (17) in dem Beleuchtungsstrahlengang und sein Sperrfilter (19) in dem Abbildungsstrahlengang liegt.

## Claims

1. A holder (12) for attaching a component (1) having a symmetric dovetail carriage (2) on its outside to a bearing surface (3), **characterized in that**:

   a pin-like bolt (4) attached just in front of and parallel to the bearing surface and adjacent to it a compression spring (6) bent away from the bolt (4) is attached, such that the preloading of the bent compression spring presses the bolt (4) and the compression spring (6) into the two inner sides of a dovetail carriage (2) pressed against the bearing surface (3).

2. Holder according to claim 1, **characterized in that**:

   the compression spring (6) is not only bent away from the bolt (4), but as well is pressed additionally in its middle region against the bearing surface (3), wherein two ring eyelets (7) that are formed integrally on both ends of the compression spring (6), the ring eyelets (7) of the compression spring (6) are angled off toward the bearing surface (3) and are clamped by two screws (8), which are aligned on a line parallel to the bolt (4), at ends of the compression spring (6) to the bearing surface (3).

3. A multiple holder wherein a movable support element (11, 14) is provided with a plurality of bearing surfaces (3) to which a plurality of holders (12) according to claim 1 for mounting a component (1) having a symmetric dovetail carriage (2) on its outside to a bearing surface (3), wherein a pin-like bolt (4) is attached in front of and parallel to each bearing surface and adjacent to it a compression spring (6) bent away from the bolt (4) is attached, such that the preloading of the bent compression spring presses the bolt (4) and the compression spring (6) into the two inner sides of a dovetail carriage (2) pressed against the bearing surface (3) and that by the movement of the support element (11, 14) any holder (12) is brought into the operating position.

4. A fluorescence microscope (31) having an illuminating beam path that is directed onto a specimen (43) and an imaging beam path that starts from the specimen (43) **characterized in that**:

   at least one holder according to claim 1 is provided, to which a fluorescence filter block (16) with an excitation filter (17) a blocking filter (19) perpendicular to the excitation filter (16) and a beam splitter (18) arranged at 45 degrees between the excitation filter (17) and the blocking filter (19) wherein the holder (12) is arranged, so that the excitation filter (17) is positioned in the illuminating beam path and the blocking filter (19) is positioned in the imaging beam path.

5. A fluorescence microscope (31) having an illuminating beam path that is directed onto a specimen (43) and an imaging beam path that starts from the specimen (43) **characterized in that**:

   a multiple holder according to claim 3 with a plurality of integrated fluorescence filter blocks (16) is provided, wherein a fluorescence filter block (16), brought into the operating position by the movement of the support element (11, 14), is arranged so that an excitation filter (17) is positioned in the illuminating beam path and its blocking filter (19) is positioned in the imaging beam path.

## Revendications

1. Support (12) pour attacher un composant (1) par un chariot à queue d'aronde (2) symétrique, qui est disposé à l'extérieur du composant (1), contre une surface d'appui (3), **caractérisé en ce que** près de la surface d'appui (3) et parallèlement à laquelle un boulon (4), qui a la forme d'une goupille, et un ressort de compression (6), qui est coudé sous tension à l'écart du boulon (4), sont attachés, de sorte que le boulon (4) et le ressort de compression (6) sont pressées par la tension du ressort de compression (6) coudé dans les cotés intérieures d'un chariot à queue d'aronde (2), qui est poussé contre la surface d'appui (3).

2. Support (12) selon revendication 1, **caractérisé en ce que** le ressort de compression (6) n'est pas seulement coudé vers l'écart du boulon (4), mais qu'il est pressé supplémentairement aussi dans son région central à la surface d'appui (3), comme deux oeillets annulaires (7) sont modelées aux deux bouts du ressort de compression (6), qui sont coudés en direction de la surface d'appui (3) et qui sont coincés seulement à leurs bouts contre la surface d'appui (3) par deux vis (8) disposées sur une ligne parallèle au boulon (4).

3. Support avec un élément de support (11, 14) avec plusieurs surfaces d'appui (3) auxquels plusieurs supports (12) selon revendication 1 pour attacher un composant (1) par un chariot à queue d'aronde (2) symétrique, qui est disposé à l'extérieur, contre cette surface d'appui (3) sont disposés, de sorte que devant chacune des surfaces d'appui (3) et parallèlement auxquelles un boulon (4), qui a la forme d'une goupille, et à coté de lui un ressort de compression (6), qui est coudé sous tension à l'écart du boulon (4), sont fixés et de sorte que le boulon (4) et le ressort de compression (6) sont pressées par la tension du ressort de compression (6) coudé dans les cotés intérieures d'un chariot à queue d'aronde (2) et que un quelconque des supports (12) peut être positionné dans une position de travail par déplacer l'élément de support (11, 14).

4.  Microscope à fluorescence (31) avec un trajet des rayons d'illumination aligné sur un objet (43) et avec un trajet des rayons d'image emmenant de l'objet, **caractérisé en ce que** un support (12) selon revendication 1 est prévu auquel un bloc-filtre de fluorescence (16) avec un filtre d'excitation (17), un filtre de blocage (19), qui est attaché perpendiculairement, et un diviseur de rayons (18), qui se trouve incliné par 45° entre le filtre d'excitation (17) et le filtre de blocage (19), est tellement attaché, que le un filtre d'excitation (17) se trouve dans le trajet des rayons d'illumination et le filtre de blocage (19) se trouve dans le trajet des rayons d'image.

5.  Microscope à fluorescence (31) avec un trajet des rayons d'illumination aligné sur un objet (43) et avec un trajet des rayons d'image emmenant de l'objet, **caractérisé en ce que** un support multiple selon revendication 3, auquel plusieurs blocs-filtre de fluorescence (16) sont attachés, est intégré, de sorte que un bloc-filtre de fluorescence (16), qui est positionnés dans une position de travail par déplacer l'élément de support, est tellement disposé, que son filtre d'excitation (17) se trouve dans le trajet des rayons d'illumination et son filtre de blocage (19) se trouve dans le trajet des rayons d'image.

Fig. 1a

Fig. 1b

Fig. 1c

Fig. 2a

Fig. 2b

Fig. 2c

Fig. 2d

Fig. 2e

Fig. 2f

Fig. 2g

Fig. 2h

Fig. 3a

Fig. 3b

Fig. 3c

Fig. 3d

Fig. 4a

Fig. 4 b

Fig. 5a

Fig. 5b